(19) **Europäisches Patentamt**
**European Patent Office**
**Office européen des brevets**

(11) **EP 1 326 478 B1**

(12) **EUROPEAN PATENT SPECIFICATION**

(45) Date of publication and mention
of the grant of the patent:
**05.11.2014 Bulletin 2014/45**

(51) Int Cl.:
*H04R 3/00* *(2006.01)*   *H04R 25/00* *(2006.01)*

(21) Application number: **03005179.1**

(22) Date of filing: **07.03.2003**

(54) **METHOD FOR PRODUCING CONTROL SIGNALS AND BINAURAL HEARING DEVICE SYSTEM**

VERFAHREN ZUR ERZEUGUNG VON KONTROLLSIGNALEN UND BINAURALES
HÖRGERÄTESYSTEM

PROCÉDÉ DE GÉNÉRATION DES SIGNAUX DE COMMANDE ET SYSTÈME D'APPAREIL AUDITIF
BINAURAL

(84) Designated Contracting States:
**CH DE DK FR GB LI**

(43) Date of publication of application:
**09.07.2003 Bulletin 2003/28**

(73) Proprietor: **PHONAK AG**
**8712 Stäfa (CH)**

(72) Inventors:
• **Roeck, Hans-Ueli**
**8634 Hombrechtikon (CH)**
• **Cadalli, Nail**
**Champaign,**
**IL 61821 (US)**

• **Bächler, Patrick**
**8610 Uster (CH)**

(74) Representative: **Troesch Scheidegger Werner AG**
**Schwäntenmos 14**
**8126 Zumikon (CH)**

(56) References cited:
**EP-A- 0 326 905      WO-A-00/68703**
**WO-A-95/15668      WO-A-99/43185**
**US-A1- 2002 041 695**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention is directed to the control of signal transfer characteristics of acoustical signals impinging upon the sensing area of a binaural hearing device system to electrical signals for driving at least one electrical/mechanical output converter of such a binaural hearing device system and to binaural hearing device systems which necessitate a communication link between a device arranged in or adjacent one ear and a device in or adjacent the other ear of an individual. The one-ear device comprises at least an arrangement of input acoustical/mechanical converters whereas the other ear device at least comprises an output electrical/mechanical converter.

A binaural hearing device system is known from US2002/041695. The output signals of two input acoustical/electrical converters at one ear of an individual are processed to result in a first combined signal.

The output signals of two input acoustical/electrical converters at the other ear of the individual are processed to result in a second combined signal.

The two combined signals are further processed to result in drive signals for respective output electrical/mechanical converters at the two ears. Thereby, the two combined signals are further processed by forming their difference, leading the difference result to a pair of controlled adaptive filters and forming two difference signals, one from the one combined signal and the output of one adaptive filter being the one drive signal, the other from the second combined signal and the output of the other adaptive filter being the other drive signal.

The one adaptive filter is controlled by the one drive signal, the second adaptive filter by the other drive signal.

From the WO 02/32208 according with US application no. 10/059059, the WO 01/20965 accordingly the US application no. 2002-0037087 or from the WO 01/22790 according to US application no. 2002/0090098 different techniques have become known by which the acoustical surrounding of an individual carrying a hearing device and thereby preferably a hearing aid device, may be classified and the transfer characteristic between the acoustical input signal to such a device and mechanical output signal of such device is controlled or adjusted according to such classifying result. The present invention is directed to exploiting a specific criterion of acoustical surrounding of the individual and thus of the hearing device on one hand for producing or manufacturing a respective control signal for such transfer characteristic, on the other hand for positively controlling such transfer characteristic of a binaural hearing device system. This is achieved by the method of claim 1 and, respectively, the system of claim 14.

According to the present invention such criterion of the acoustical surrounding is the angular location of acoustical sources within such surrounding.

The angular positions of acoustical sources in the acoustical surrounding of the device are thereby determined by generating the first signals or data which are indicative of direction of arrival. As will be seen exploiting such direction of arrival DOA allows classifying the acoustical surrounding under many criteria additional to just angular localisation of acoustical sources.

In a most preferred embodiment of the present invention the control signal or data are realised in dependency of the first signals or data, in that there is generated from a signal or data which depends from the first signal or data which depends from the first signals or data a histogram, and the control signals or data are generated in dependency of such histogram. By forming a histogram from signals which are indicative of DOA the time evolution of acoustical surrounding is monitored somehow like low-pass filtering. Short term variations of the acoustical surrounding are filtered out and there remains in the histogram information about more relevant and persisting characteristics of the acoustical surrounding.

Thereby an accurate estimation of the prevailing acoustical surrounding becomes possible.

In a further preferred embodiment of the present invention the histogram as generated is classified and different control signals or data are generated in dependency of the result of such classifying.

We understand under classification of a histogram watching different characteristics of such histogram as e.g. peak-magnitude, peak-width, relative positioning of such peaks, time evolution etc. and establishing which characteristics of the acoustical surrounding lead to which characteristics or combination of characteristics in the histogram as a bases for appropriately setting or controlling the transfer characteristic of the device. Thereby the acoustical surrounding is considered related to the device which receives the acoustical signals so that not only different behaviours of the acoustical surrounding itself but additionally some behaviour of the device and thus of the individual in the acoustical surrounding may be evaluated or detected.

In a preferred mode of operating the methods according the present invention the histogram function is classified according to at least one of the following aspects or criteria:

- how is the angular location and/or its evolution of an acoustical source with respect to the hearing device and/or with respect to other sources

- what is the distance and/or its evolution of an acoustical source with respect to the device and/or with respect to other acoustical sources

- which is the significance of an acoustical source with respect to other acoustical sources

- how is the angular movement of the device itself and thus of the individual with respect to the acoustical surrounding and thus to acoustical sources.

The control signals or data are generated in dependency of the result of such classifying at least under at least one of said criteria i.e. in dependency of the answers electronically found under such criteria. In a further preferred embodiment of the methods according to the present invention the hearing device is provided with a beamformer characteristic. Such a beamformer characteristic defines for amplification between an acoustical signal which impinges on the device's sensing area and an electrical signal or data in dependency of direction of arrival of the acoustical signal with respect to the sensing area. Thereby controlling the addressed signal transfer characteristic at least comprises controlling the beamformer characteristic.

By generating the first signal or data indicative of direction of arrival of an acoustical signal it is e.g. possible to determine whether the beamformer's amplification characteristic has its maximum at that angle which accords with the DOA angle. If it hasn't and if the source at the specific DOA is to be accurately tracked, the beamformer is e.g. adjusted to shift its maximum amplification angle so as to coincide with the DOA. Thereby source tracking is performed. In analogy a source under a detected DOA may be cancelled as at least momentarily of no interest, by shifting low- or zero-amplification of the beamformer to occur at the specific DOA of that source.

Also under this beamformer control aspect it is preferred to generate in dependency of the first signals or data (DOA-indicative) a histogram and controlling at least the beamformer characteristic of the device in dependency of such histogram.

With respect to the advantages of subjecting direction of arrival indicative signals to histogramming, the same prevails as was outlined above.

In analogy to the above addressed classifying technique in a still further preferred embodiment the histogram is classified and different control signals or data which at least control the beamformer characteristic are generated in dependency of the result of such classifying. Further classifying the histogram comprises classifying such histogram under at least one of the following criteria:

- how is the angular location and/or its time evolution of an acoustical source with respect to the device and/or with respect to other sources

- what is the distance and/or its time evolution of an acoustical source with respect to the device and/or with respect to other sources

- what is the significance of an acoustical source with respect to other acoustical sources

- how is the angular movement of the device itself with respect to the acoustical surrounding.

Thereby controlling at least the beamformer characteristic is performed in dependency of the result of the classifying which comprises classifying under at least one of the said criteria.

In a further most preferred embodiment the methods according to the present invention comprise the steps of generating the first electric signal in dependency of acoustical signals which impinge upon a first acoustical receiver. Second electrical signals are generated in dependency of acoustical signals impinging upon a second acoustical receiver. A first electrical/mechanical output converter is driven by a third electrical signal whereas a second electrical/mechanical converter is driven by a forth electric signal. By control signals or data generated according to the present invention, at least one of the following signal transfer characteristics is controlled and adjusted:

- transfer characteristic from the first electric signal to the forth electric signal

- transfer characteristic from the second electric signal to the forth electric signal

- transfer characteristic from the first electric signal to the third electric signal

- and finally transfer characteristic from the second electric signal to the forth electric signal.

Thereby considering the two acoustical receivers provided and the two electrical/mechanical output converters provided, by the said transfer characteristics the influence of each of the said acoustical receivers upon each of the said output converts may be controlled or adjusted respectively in a preferred realisation form.

Again in a preferred realisation form the at least one transfer characteristic and thereby in a further preferred embodiment all the four transfer characteristics as mentioned are controlled by exploiting a histogram of a signal which is dependent from at least one of the first and of the second electric signals and thus from the acoustical signals impinging upon the first and/or second acoustical receivers.

In a still further embodiment such histogram is classified and the at least one of said transfer characteristics is controlled in dependency of the result of classifying. Thereby classifying is preferably performed at least under at least one of the above mentioned classification criteria.

In a most preferred embodiment of the method performed with at least two acoustical receivers and the two electrical/mechanical output converters, at least one head related transfer-function HRTF is reintroduced by respectively adjusting the at least one of the said transfer characteristics. This is done in the transfer characteristics from the first signal to the forth signal and/or from the second signal to the third signal.

As an example:

Whenever an acoustical source becomes or is angularly located so that, considered from one acoustical receiver, it appears acoustically shadowed or masked by the individual's head, whereas, considered from the other acoustical receiver it is directly acoustically seen, on one hand the acoustical signal to the first mentioned masked receiver will be significantly smaller than the acoustical signal impinging on the unmask receiver so that reception of that acoustical signal at the unmask receiver will be more accurate e.g. with respect to signal to noise. Therefore it might be advantageous not only to drive the output converter adjacent to the unmask receiver primarily in dependency of its output signal, but also to drive the other output converter adjacent to the masked acoustical receiver primarily in dependency of that signal with high SNR. Nevertheless in such a case the signal transfer characteristic from the unmasked receiver to the output converter adjacent the masked receiver should re-establish the HRTF i.e. the masking effect of individuals head, so as to allow the individual to perceive the acoustical signal of that source spatially correct.

Further preferred embodiment of the methods according to the present invention as well as of the binaural hearing device system according to the present invention will become apparent to the skilled artisan when reading the following description of preferred embodiments of the present invention as well the appending claims.

From the WO 99/43185 a binaural hearing device system is known, whereat each device associated to an ear comprises an input acoustical/electrical converter and an output electrical/mechanical converter. There is further provided a communication link between the two devices whereby data or signals are cross communicated via such link which are respectively dependent from the output signals of the respectively provided acoustical/electrical input converters. Thereby before the respective converter output signals are applied to the communication link they are analogue/digital converted whereby there may be implemented in the respective analogue/digital converters some additional signal preprocessing. Further such a system is known from the US 2002-004695A1. Location of the communication link appears to be unambiguously defined.

Today's monaural hearing devices customarily have at least two input acoustical/electrical converters for beamforming purposes. The binaural system according to the WO 99/43185 may be tailored to provide beamforming by using the two input converters provided at the respective one ear attributed devices. Thereby, as outlined above, data are cross-transmitted via the communication link which are possibly preprocessed but which comprise substantially more information than really needed. Further beamforming with two input converters placed one on each side of individuals head may be quite complex and inaccurate e.g. due to the head-related acoustical transfer functions HRTF which describe the effects of acoustical signals being "shadowed" by individuals head. Such shadowing occurs, dependent on direction of arrival of acoustical signals, asymmetrically with respect to both ears which on one hand allows spatial perception, on the other hand renders beamforming quite complex.

It is an object of the present invention to provide the binaural hearing device system and respectively the method for controlling such binaural hearing device system whereat the technique of providing at least two input acoustical/electrical converters at one ear's device is maintained as known from monaural devices and additionally there is nevertheless applied to the communication link only one signal or data which is thereby dependent from the output signals of both of the at least two input converters at one ear's device. Thereby a significantly reduced amount of data is transmitted via said link compared with a case where, following the concept of the WO 99/43185, output signals of each input converter are separately transmitted via the link.

This object is resolved by the binaural hearing device system according to the present invention, whereby the first device comprises at least a reception unit with at least two input acoustical/electrical converters and a signal processing unit the inputs of which being operationally connected to the electrical outputs of the at least two converters and which generates at a combined output a signal which is dependent on signals at both the said inputs whereby the signal link is provided at the output side of such processing unit and transmits data signals which depend upon the output signal of the processing unit and upon a signal or data indicative of direction of arrival of acoustical signals impinging on said at least two input acoustical/electrical converters.

As was mentioned above the system according to the present invention provides in one embodiment the first device to be applied to one ear not having an electrical/mechanical output converter and thus only having in a reception unit the at least two acoustical/electrical input converters. This embodiment might be most valid e.g. if on any reason it is not possible to apply a device with at least two input converters at that ear where hearing shall be improved.

Thereby the second device does not comprise an input acoustical/electrical converter irrespective whether the first device has an output converter or not.

In a further preferred embodiment an output electrical/ mechanical converter provided at the first device is operationally connected to the output of the processing unit and is thus driven by a combined signal or data dependent on both outputs of the at least two input acoustical/electrical converters provided.

In a still further preferred embodiment the system according to the present invention has the reception unit of the first device as a first reception unit whereby the at least two input acoustical/electrical converters thereat are first acoustical/electrical converters. Additionally the signal processing unit still at the first device is a first signal processing unit.

Further the output electrical/mechanical converter at the second device is considered as a second output electrical/mechanical converter. The first device comprises a first output electrical/mechanical converter and the second device a second reception unit.

Thus both devices for each of the two ears have respective reception units and thus input acoustical/electrical converters and respective output electrical/mechanical converters.

Nevertheless the second reception unit at the second device needs not necessarily have more than one input acoustical/ electrical converter although providing also there at least two input acoustical/electrical converters is preferred.

Further the communication link which is provided in all embodiments according to the present invention, for communicating between devices adjacent or in the respective ears, maybe wirebound and/or based on optical fiber and/or on wireless communication.

Whenever both ears devices are equipped with input acoustical/electrical converters in a preferred embodiment both devices are equipped with at least two of such converters which gives the possibility to provide at both devices beamforming ability. Thereby further preferably also the second reception unit is equipped with a signal processing unit whereby, further preferred, the inputs of such processing unit are operationally connected to the electrical outputs of the second input converters at the second reception unit. This processing unit generates at a respectively second output a signal which is dependent on signals at both said inputs of the second signal processing unit whereby the signal link is provided at the output side of the second signal processing unit. Thus via the addressed signal or communication link combined signals dependent respectively on the output signal of at least two input converters are bidirectionally transmitted from one device to the other and vice versa.

Thereby and in a further preferred mode or embodiment the output of the first signal processing unit is operationally connected to a first input of a weighting unit and the output of a second signal processing unit is operationally connected to a second input of the weighting unit. The weighting unit has a first output which is operationally connected to an input of a first output converter and has a second output which is operationally connected to the input of the second output converter. Thereby the weighting unit may be construed decentralised e.g. in both devices. The weighting unit has a control input and varies operational connection or signal transfer between the first input and the first output, the first input and the second output, the second input and the first output and finally the second input and the second output. Such signal transfers are controlled by a signal or data applied to the control input of said weighting unit. Thereby such operational connections between respective inputs and outputs are formed preferably frequency or frequency-band specifically and the respective functions which are controlled independently from one another are possibly but not necessarily complex functions.

So as to determine how the operational connections between respective inputs and outputs at the weighting unit have to be controlled, especially according to the acoustical surrounding present, the control input of the weighting unit is preferably connected to an output of a classification unit which later has at least one input operationally connected to an output of at least one of the reception units.

In a further most preferred embodiment the first device comprises a beamformer unit which has a beamcontrol input and an output. Via the beamcontrol input the directional characteristic of the beam as an amplification characteristic in dependency of spatial angle at which an acoustical signal impinges on the device, may be varied.

There is further provided the detection unit for detecting the direction of arrival of an acoustical signal which impinges upon the reception unit which unit generates at an output an output signal in dependency of said direction of arrival. This output is operationally connected to the beamcontrol input of the beamformer unit so that e.g. a source of acoustical signal the direction of arrival of which having been detected may be more accurately tracked by accordingly directing a maximum amplification direction of the beam upon such a source. Accordingly a source, as e.g. a noise source, the direction thereof having been detected may be cancelled by controlling the beam so that it establishes in that noise source direction minimum amplification.

As was mentioned above in a preferred embodiment there is provided a weighting unit whereat signal transmission between respective inputs and outputs is controlled. Thereby control of such signal transmission is made dependent from the result achieved in a classification unit the input thereof being operationally connected to at least one output of at least one of the reception units.

Departing from this embodiment and in a further preferred mode there is provided at the system the determination unit for the direction of arrival of an acoustical signal impinging on at least one of the devices whereby such direction determination unit is interconnected between at least one input of the classification unit and at least one output of at least one of the reception units at the devices.

Thus the classification which finally controls signal transfer at the weighting unit at least comprises classification of signals which depend on direction of arrival. Thereby and as a further improvement of such embodiment there is provided at least one histogram forming unit, the input thereof being operationally connected to at least one output of at least one of the reception units.

The output thereof is operationally connected to an input of the classification unit. Thus classification at least comprises classification based on a histogram result. Most preferably and with an eye on providing the direction of arrival determination unit such histogram forming unit is provided with an input operationally connected to an output of the determination unit and an output operationally connected to the classification unit. Thereby classification at least comprises classification of a histogram function of a signal or of signals which identify such direction of arrival.

Further preferred embodiments of the methods according to the present invention as well as of the system according to the present invention will become apparent to the skilled artisan when reading the following description of preferred embodiments of the present invention as well as the claims.

The present invention will now be further described with the help of figures. What is shown in the figures is:

Fig. 1    a schematic, simplified functional block/signal-flow representation of an example of a binaural hearing device system;

Fig. 2    in a representation form in analogy to that of fig. 1 a further example of such a system;

Fig. 3    a simplified schematic functional block/signal-flow representation of a first embodiment according to the present invention, operating according to the methods of the present invention;

Fig. 4    in the same representation form a further embodiment of the present invention;

Fig. 5    a simplified schematic functional block/signal-flow representation of a subembodiment for automatic beamcontrol e.g. to track acoustical sources and/or to cancel reception of acoustical sources. Such embodiment may preferably be incorporated within the embodiments according to the present invention;

Fig. 6    departing from a system or methods according to fig. 4 a simplified schematic functional block/signal-flow representation of an improved embodiment of such system or methods;

Fig. 7    a simplified schematic functional block/signal-flow representation of a system or method for controlling a binaural hearing device according to the present invention as a function of direction of arrival of acoustical signals as detected and preferably classified;

Fig. 8    examples of direction of arrival behaviours as appearing on a histogram function to explain some of more simple classification criteria as preferably exploited at the system or methods of fig. 7 as well as at systems or methods to be shown with the help of the fig. 9 and 10;

Fig. 9    a simplified schematic functional block/signal-flow representation of an improved and today preferred form of a further embodiment of the system according to the present invention and of the methods according to the present invention;

Fig. 10    departing from the representation of fig. 9 a more detailed representation of such system or methods making use of direction of arrival detection as described in more details in the WO 00/68703 which accords with the US application no. 09/636 443 and 10/180 585.

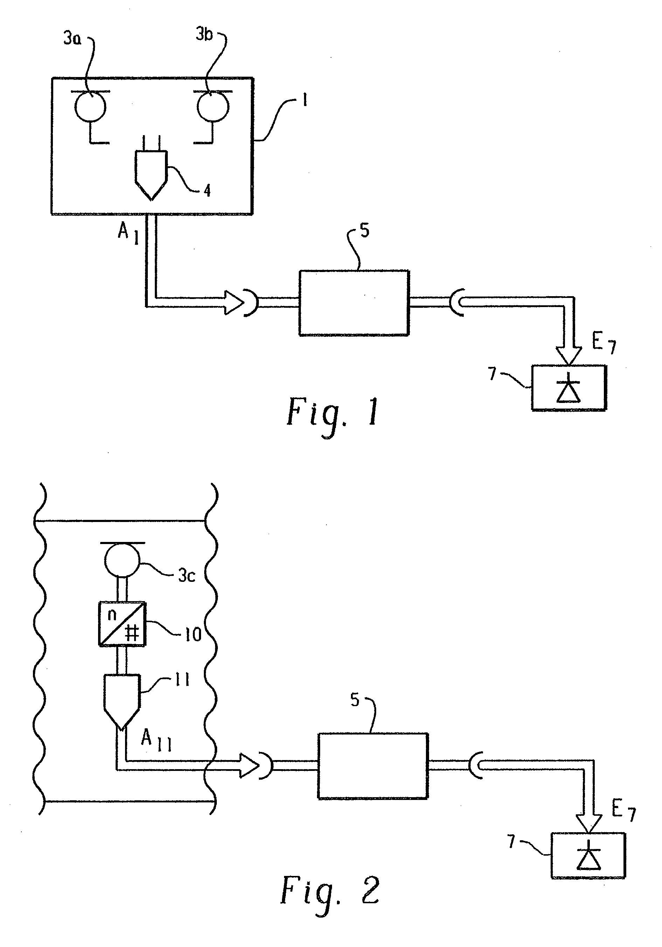

According to fig. 1 an example of a binaural hearing device system is schematically shown by means of a simplified functional block/signal flow diagram in a minimal configuration. There is provided an acoustical reception unit 1 with at least two acoustical/electrical converters 3a and 3b, both with a respective acoustical input and an electrical output. Reception unit 1 may incorporate e.g. respective analog to digital converters connected to the outputs of the converters 3a, 3b, time domain to frequency domain conversion units downstream such analog to digital converters and has a signal processing unit 4 for processing signals in dependency of the analog signals appearing at the outputs of the converters 3a, 3b. Processing unit 4 generates at an output $A_1$ of reception unit 1 a signal or data which is result of combined processing of signals dependent on the output signals of both converters 3a and 3b: The output signal at $A_1$ depends on the output signals of both converters 3a, 3b. This signal or data at output $A_1$ possibly further processed at respective signal processing units (not shown) generates a signal or data, which is dependent on the output signal or data at $A_1$, which is transmitted to a transmission link 5, which again may incorporate further signal processing. At the output side of transmission link 5 a signal or data, which is dependent on the signal appearing at the output $A_1$ of unit 1, is input to an input $E_7$ of an electrical/ mechanical converter unit 7. Unit 1 is applied adjacent or within one of an individual's ears, unit 7 to the other.

The system as shown in fig. 1 is in an embodiment a hearing aid system i.e. a therapeutical system. Unit 7 is thereby an outside-the-ear or an inside-the-ear converter unit or an implanted or implantable unit. By this minimal system acoustical signals are received on one of individual's ears and control hearing at the other ear. Such a system may be provided, where on any reasons, applying the reception unit 1 is not possible or difficult on that ear where hearing shall be improved or reinstalled.

The concept of applying a reception unit as of unit 1 at or adjacent one ear and transmitting signals or data dependent on the received acoustical signals at such reception unit to the other ear for improving hearing at that other ear, this concept is valuable, irrespective of how reception unit, signal link to the other ear and a other's ear converter unit as of unit 7 of fig. 1 are conceived: Under this concept one ear is only provided with an electrical/mechanical unit and no reception unit. The embodiments of figs 1 to 3 address such concept. In any case the link 5 may be electric wire based, optical fiber based or may be a wireless communication link.

The double-line arrows shown in Fig. 1 and following figures represent signal or data communication paths. Along such signal path additional signal processing by respective units may be established. The double-arrows may indicate a direct signal transmission, but rather stand for an operational connection, in which signals are transmitted and processed in direction of the arrow.

By the system according to fig. 1 only data or signals are transmitted via transmission link 5, which have been preprocessed as by combining signals of at least two acoustical to electrical input converters 3a, 3b.

In fig. 2 there is shown in a representation, in analogy to that of fig. 1, a further example of a binaural hearing device system, which only differs from that of fig. 1 in that unit 1 of fig. 1 is now conceived as a unit 10 to be applied completely introduced in an individual's ear channel, a so-called CIC-device. As known to the skilled artisan such a CIC unit customarily has only one input acoustical to electrical converter 3c. By means of a digital signal processing unit 11, which is operationally connected e.g. via time domain to frequency domain converter and analog to digital converter to the analog output of converter 3c, at least a Wiener-filtering is performed. The output signal or data of converter 3c is processed by a Wiener filter to result in significantly preprocessed data before being transmitted via communication link 5 to the electrical to mechanical converter unit 7.

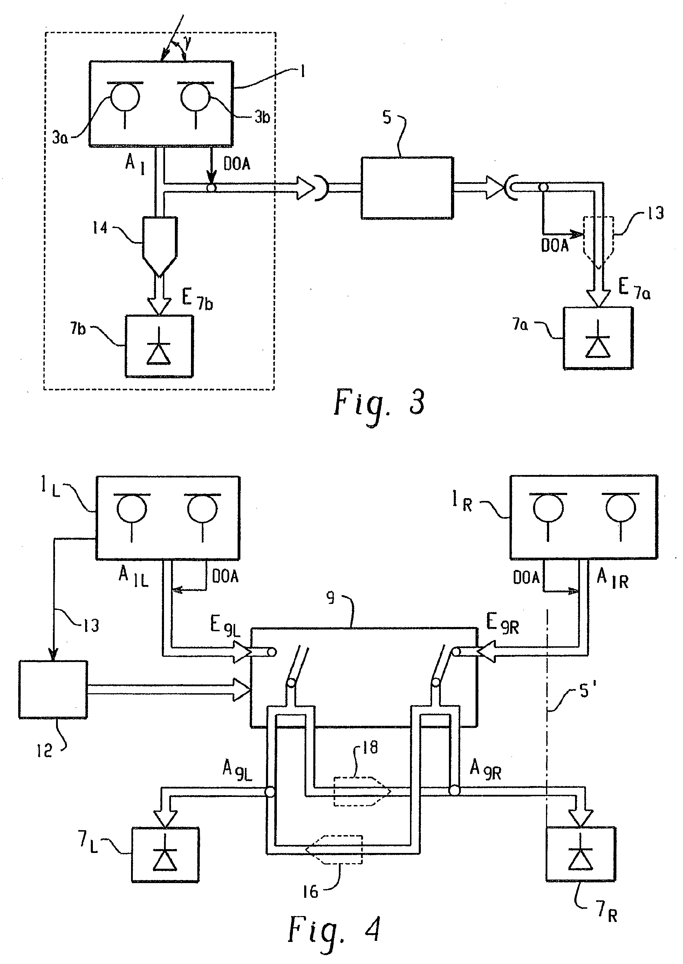

In fig. 3 there is shown in a representation in analogy to that of the figs. 1 or 2 a first embodiment of the addressed system. According to the system of fig. 3, the difference to the system of fig. 1 is that the output $A_1$ of reception unit 1 is not only, via transmission link 5, operationally connected to the input $E_7$ of the electric/mechanic converter unit 7 at the other of individual's ears, but output $A_1$ is additionally operationally connected to an electrical/mechanical converter unit 7b, which is provided at the same ear as reception unit 1.

It is evident that in dependency of the signals or data at output $A_1$ the left ear and the right ear units 7a and 7b have normally to be differently operated. Thus there are generically installed different and/or differently operating signal processing units as on one hand between the output $A_1$ and link 5, link 5 and input $E_{7a}$, and on the other hand output $A_1$ and input $E_{7b}$ of unit 7b. In the case of the embodiment of fig. 3 and as shown in dashed-pointed frame, the units 1 and 7b are preferably incorporated in a unitary hearing device, especially in a hearing aid device being a behind- or an in-the-ear hearing device.

According to the embodiment of fig. 3 there is in fact established a MASTER-acoustical control by reception unit 1 at one ear of the individual, whereas a hearing device without an input acoustical to electrical converter unit is operated at the other ear as a SLAVE device.

Departing from the system and method as explained with the help of fig. 3 an embodiment of the invention is shown in fig. 4, still in a representation in analogy to that of the figures 1 to 3.

According to the system of fig. 4 there is provided for the left ear of an individual a reception unit $1_L$ and for the right ear a reception unit $1_R$. Both reception units $1_L$ and $1_R$ are conceived with respect to signal or data processing as was explained with respect to reception unit 1 in context with fig. 1. A signal or data dependent from the signal or data at the output $A_{1L}$ of reception unit $1_L$ is fed to an input $E_{9L}$ of a selection unit 9. A signal or data which is dependent from the signal or data appearing at the output $A_{1R}$ of the right ear reception unit $1_R$ is fed to an input $E_{9R}$ of the selection unit 9. There is further provided a left ear electrical/mechanical output converter unit $7_L$ and a right ear electrical/mechanical output converter unit $7_R$.

The selection unit 9, as schematically shown by a switching arrangement, has an output $A_{9L}$ and an output $A_{9R}$ respectively operationally connected to the inputs of output converters $7_L$, $7_R$. Signals or data appearing at either of the outputs $A_{9L}$ or $A_{9R}$ may operationally be connected to both electrical to mechanical converter units $7_L$ and $7_R$. Under the control of a selection-control unit 12 and, as schematically shown in unit 9 by an arrangement of switches, the input $E_{9L}$ or the input $E_{9R}$ is operationally connected to both of the converters $7_L$, $7_R$. Thereby, whenever the operational signal or data connection within selection unit 9 is established according to that switching position shown in fig. 4, both converters $7_L$ and $7_R$ are operationally connected to the right ear reception unit $1_R$, and therefore the right ear reception unit $1_R$ is the MASTER. In analogy, unit $1_L$ becomes MASTER whenever the units $7_L$ and $7_R$ are operationally connected to the input $E_{9L}$ of selection unit 9.

In this embodiment again the right ear units $1_R$ and $7_R$ are preferably incorporated in a unitary right ear hearing device, be it a hearing aid device or be it a hearing device for other than therapeutical appliances. In analogy the units $1_L$ and $7_L$ are incorporated in a respective left ear unitary device. Such hearing devices may thereby be in-the-ear or outside-the-ear hearing devices or their output converters $7_L$ and/or $7_R$ may be construed as implantable devices. Further, the right and left ear devices do not necessarily have to be of the same type, e.g. an in-the-ear and an outside-the-ear hearing device may be combined, an outside-the-ear and an implant device etc.

Looking back on fig. 3 it has been shown that the acoustical signal impinging on unit 1 at one ear, e.g. at the left year, binaurally controls both electrical to mechanical output converter units 7a and 7b. We have established that double-lined arrows stand for operational signal or data communication and not necessarily for direct connection. Thus, along operational connections processing as by processing units, especially DSPs, may be done. For example: As according to fig. 3 the acoustical signals impinging on unit 1 do control both output converters 7 and thus the head-related transfer function HRTF for the SLAVE side with converter 7a is lost, there will preferably be provided as shown in dashed line a DSP 13 exclusively influencing signals or data input to the SLAVE converter 7a and whereat the respective HRTF is taken into account. So as to properly set the parameters of processing in DSP unit 13 for taking the HRTF functions into account, the reception unit 1 detects direction of arrival DOA as denoted by $\varphi$ in fig. 3 and there will be transmitted additionally to the signal or data dependent from those appearing at output $A_1$ of unit 1, via link 5, a DOA-significant signal or data to DSP 13 as shown by signal DOA. Further, there will be preferably provided a DSP 14 just upstream the input $E_{7b}$ and DSP 13 or a further DSP to input $E_{7a}$ as well as DSP 14 will take in account different signal processing needs according to the hearing improvement needs at the respective ears.

When looking to the embodiment of fig. 4 in analogy to the just given explanations with respect to the system of fig. 3, whenever the right ear device is MASTER, the HRTF will preferably be considered for the left ear converter $7_L$, i.e. the SLAVE and vice versa. Thus, the left ear HRTF is taken into account by a DSP 16, and the right ear HRTF by a DSP 18. Preferably that one of the units 1L and 1R, which acts as a MASTER, provides for data about direction of arrival DOA (not shown) so as to control the transfer characteristic of the respective HRTF DSP 16 and 18.

With an eye on Fig. 1 or 2, there the processing unit 4 will preferably take the HRTF of the left side ear into consideration.

With respect to one preferred possibility for detecting direction of arrival DOA of acoustical signals at the reception units 1, 10, 1L and 1R, we refer to the WO 00/68703 "Method for localizing direction" of the same applicant, wherein a technique for detecting such direction of arrival DOA is completely disclosed. This WO 00/68703 accords with US application no. 09/636 443 and no. 10/180 585. Thereby, the reception units 1, 1L, 1R may preferably further comprise beam formers as are e.g. described in the WO 00/54553, according to US application No. 09/267 742, the WO 99/04598, according to US application No. 09/146 784, the WO 99/09786, according to US application No. 09/168 184, all of the same applicant.

Thus, in the embodiment such units 1, 1L, 1R provide for both, namely beam forming as well as detection of DOA. Thereby, in a further preferred embodiment beamforming is controlled by the DOA.

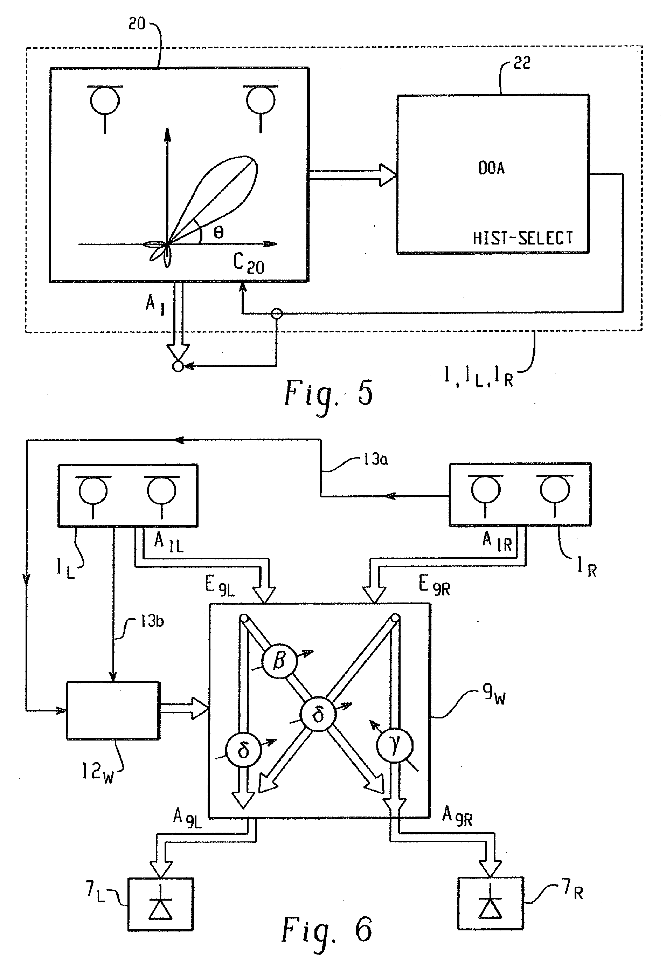

This preferred form of realizing the reception units 1, 1L, 1R as discussed up to now is schematically shown in fig. 5. Thereby, the units 1, 1L, 1R comprise a beamforming subunit 20 with at least two input acoustical/electrical converters. At the output of such unit, which accords to output $A_1$ or $A_{1L}$, $A_{1R}$ there appear electrical data or signals in dependency of acoustical signals impinging on the at least two input converters and amplified according to a predetermined characteristic in dependency of spatial angle with which the acoustical signals impinge on the input converters. The outputs of the acoustical to electrical converter are further exploited e.g. according to the teaching of the WO 00/68703 so as to provide for a signal which is indicative of the direction of arrival DOA of the acoustic signals. Thereby preferably and as described in the said WO 00/68703, there is performed a histogram of the DOA signals, as will be discussed later. The output of a histogram-forming and evaluating unit 22 controls beamformer unit 20 at a control input $C_{20}$ e.g. to track an acoustical source selected with high amplification or to delete such acoustical source by low amplification.

Turning back to the system of fig. 4, it may be seen that the data link 5, which was shown in the figs. 1 to 3, has not been shown anymore. Such data link, by which signals or data are or is transmitted from one ear side to the other, may be provided in the system as of fig. 5, wherever felt best. The selection unit 9 may e.g. be incorporated in one of the left ear or right ear devices, e.g. in the left ear device and then the addressed data link 5 will be provided at 5' as shown in fig. 5. On the other hand the selection unit 9 may be split into left ear device- and right ear device-units, and then the data link 5 would be established and following the representation of fig. 4 practically within selection unit 9.

Further, with an eye on fig. 4, this system clearly operates one of the two devices as a MASTER, the other one, and thereby especially the output converter 7 thereof, as a SLAVE. Changing this MASTER/SLAVE relation occurs abruptly and it is not possible to gently control the MASTER/SLAVE weighting of the two devices. This becomes possible by the improvement on fig. 4, which shall be explained with the help of fig. 6.

According to fig. 6, wherein units which correspond to units already described in context with fig. 4 have been denoted with the same reference number, the selection unit $9_W$ in fact is a weighting unit. Therein, the influence of a signal or data dependent from such signal or data at output $A_{1L}$ upon signal or data respectively appearing at the outputs $A_{9L}$ and $A_{9R}$ is continuously adjustable, as shown schematically by variable coefficients $\alpha$, $\beta$. In analogy the influence from output $A_{1R}$ upon the two outputs $A_{9L}$ and $A_{9R}$ of unit $9_W$ is adjusted as schematically shown by variably controllable coefficients $\gamma$ and $\delta$. The coefficients $\alpha$, $\beta$, $\gamma$, $\delta$ are preferably frequency dependent or at least dependent from frequency bands and are normally of complex value. These weighting coefficients are controlled by a selection control unit $12_W$.

In the embodiments according to the figs. 5 and 6 there is provided respectively a selection control unit 12 or $12_W$ not having been described yet. The selection control unit 12 and respectively $12_W$ are in fact classification units, whereat the instantaneously prevailing acoustical environment and/or the time development in the past up to the present of such acoustical surrounding and even a trend estimation for future development of such acoustical signals is classified according to predetermined criteria as e.g. disclosed in the WO 02/32208 which accords with US application no. 10/059 059 or in the WO 01/20965 according to US application no. 2002-0 037 087 or in the WO 01/22790 according to US application no. 2002-0 090 098. In any case to the classifier and control units 12, $12_W$ there is input information about the acoustical signals received at units 1, $1_L$ and/or $1_R$ as shown at 13 in Fig. 4, at 13a, 13b in Fig. 6. A preferred classification technique shall be described in the following.

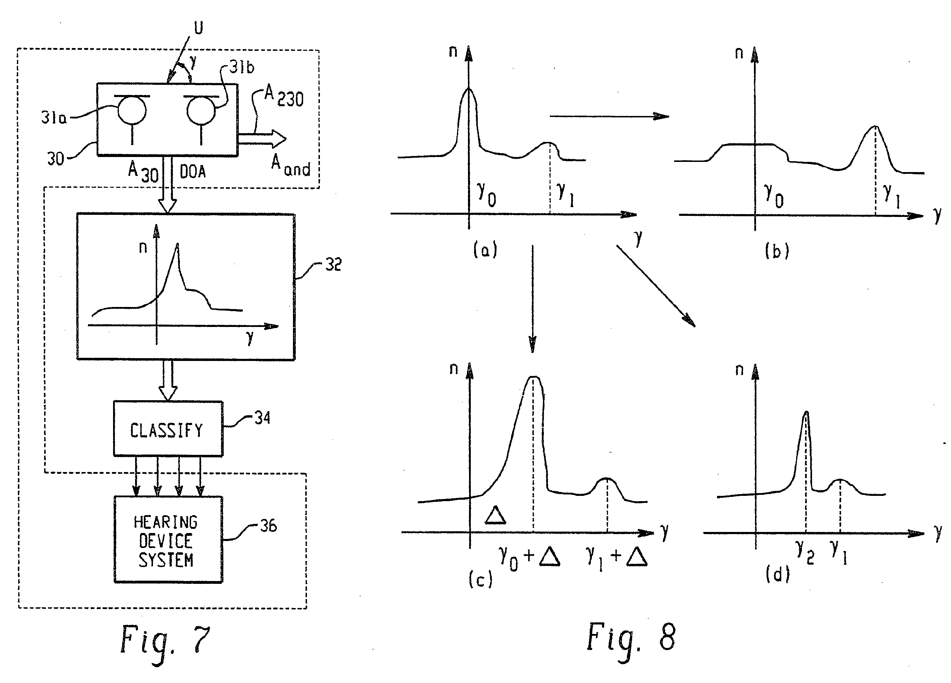

The preferred classification technique is schematically shown in fig. 7, by a representation in analogy to that used throughout the figs. 1 to 6. It comprises a reception unit 30 with at least two input acoustical to electrical converters. The unit 30 operates so as to generate an output electrical signal or data at output $A_{30}$ indicative of the spatial direction of arrival DOA with which an acoustical signal impinges upon the acoustical inputs of the input converters 31a and 31b as provided. Such a unit is known e.g. from the WO 00/68703 which accords with the US application No. 09/636 443 and 10/180 585 of the same applicant. From the instantaneously monitored DOA there is generated by means of a processing unit 32 a histogram function of DOA. This is also known from the WO 00/68703. Thus, there is formed a histogram of the instantaneously prevailing DOA. The DOA-histogram which is used as entity for classifying the acoustical signals in unit 34, which impinge upon the unit 30 and for controlling system adjustment especially according to figs. 4, 5, or 6. Thereby and as schematically shown in fig. 7 by dashed-dotted lines, the reception unit 30 is preferably a part of a hearing device system 36. The signals or data representing audio signals are generated by unit 30 at output $A_{230}$, if that unit 30 performs combined tasks of DOA detection and audio signal processing. The histogram generated at unit 32 is now classified in classifying unit 34, which controls at its output most generically the behavior of a hearing device system, which is a binaural hearing device system as shown in Figs. 1 to 6.

Accordingly in fig. 8 there is shown more than one output of classifying unit 34 representing different controls to the hearing device system according to different types of histogram appearance and thus of acoustical source behavior in the acoustical surrounding U of fig. 7 of the hearing device system, and thus of an individual carrying such system.

In fig. 8a there is shown purely as an example such a histogram function represented by the overall time or in fact the overall number n of measuring samples, which result in a specific DOA spatial angle $\varphi$. For the $DOA\varphi_0$ a relatively sharp peak is present indicating that at that angle $\varphi_0$ to the acoustical input of the converters 31a and 31b there is a significant acoustical source in the acoustical surrounding U. At $\varphi_1$ there is a second yet less relevant acoustical source present in the surrounding U.

Departing from this histogram (a) some possible evaluations in time shall be discussed. According to fig. 8(b) at the DOA $\varphi_0$ the peak has become broadened and its amplitude has dropped. This means e.g. that the acoustical source at the angle $\varphi_0$ has become diffuse, which may be caused by an increase of distance between the reception unit 30 and the acoustical source in the surrounding U. According to fig. 8(c) and still considered as an evolution in time of the situation as present according to fig. 8(a), it may be seen that the histogram has been shifted by an angle $\Delta$. This means that the reception unit 30 has rotated relative to the acoustical surrounding U, in other words that the individual carrying a system with unit 30 has turned his head by the angle $\Delta$. This is identified because the relative positioning of the sources in the surrounding U according to fig. 8(a) at $\varphi_0$ and at $\varphi_1$ remains stable.

According to fig. 8(d) the peak appearing at the DOA $\varphi_0$ according to fig. (a) now appears at a different angle $\varphi_2$, whereas the source of at $\varphi_1$ according to fig. (a) still appears at the unchanged angle $\varphi_1$. This means that the source at $\varphi_0$ according to fig. (a) has moved to the new angular position $\varphi_2$, whereby the reception unit 30 has not rotated, i.e. the individual has kept his head stationary. From these explanations it may be seen which kind of criteria are used in classifying unit 34 of fig. 8 to establish a relevant acoustical source, increasing distance, decreasing relevancy of a source, appearance/disappearance of a source movement of individual's head relative to the acoustical surrounding, angular movement of a source in the surrounding U, etc.

From combining and adding further classifying criteria an intelligent evaluation of the acoustical surrounding is performed and by the respective results the behavior of the hearing device system 34 is controlled. This may include source tracking by controlling beamforming and/or with an eye back on fig. 5 and 7 appropriate distribution of the influence or signal transfer of binaurally provided reception units upon binaurally provided output converters.

Thus the present invention is directed on classifying signals or data which are indicative of the DOA and controlling the status or behavior of a hearing device in dependency of the classification result. Thereby most preferably classification is performed upon those data or signals wherefrom a histogram has been formed.

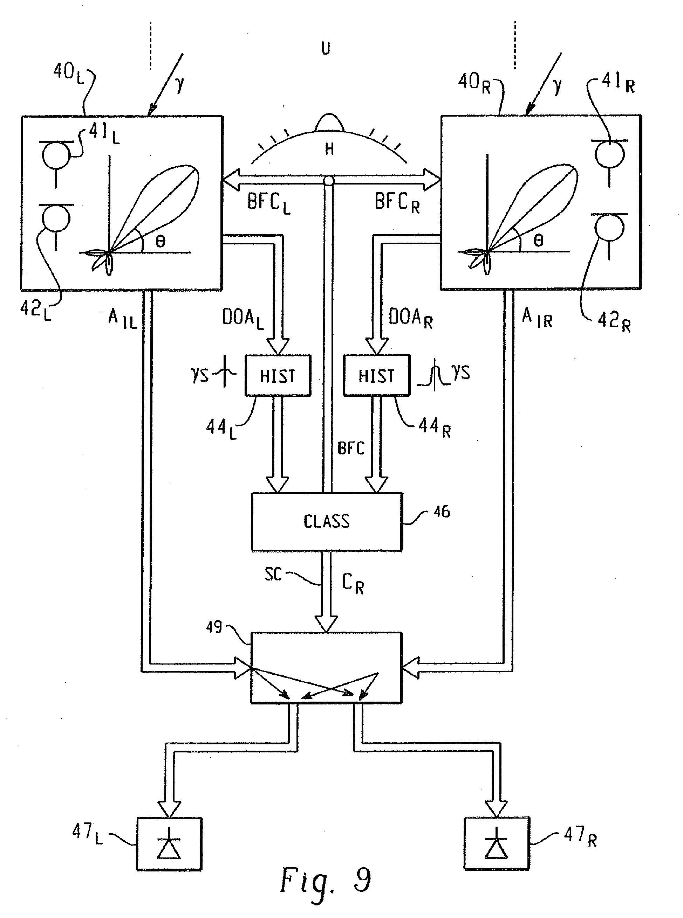

In fig. 9 there is shown a further preferred embodiment of the present invention.

A left ear reception unit $40_L$ of a left ear hearing device is conceived as a beamformer with at least two input converters $41_L$. The right ear hearing device, as an example, is equally construed as the left ear device and thus comprises a reception unit $40_R$ equal to the unit $40_L$. In analogy to the representation in fig. 6 at the respective outputs $A_{1L}$, $A_{1R}$ electrical signals or data are generated as a result of processing the output signals of the converters 41. These signals are thus dependent on the acoustical signal impinging on the reception units, amplified according to the beamformer characteristics. The units 40 preferably comprise a respective beamformer control input $BFC_L$ and $BFC_R$, by which the shape of the beamformer characteristic, but especially the angle $\theta$ of maximal amplification may be adjusted. The units 40 further generate output signals, which are indicative of the $DOA\varphi$ of acoustical signals impinging on the acoustical inputs at the units 40. Signals or data dependent from these output signals $DOA_L$, $DOA_R$ are respectively input to histogram-forming units $44_L$, $44_R$. The units 40 combined with histogram-forming units 44 may and are preferably realized as described in the WO 00/68703, which accords with the US application No. 09/636 443. Thereby and as seen in this paper the beamformers are based on the delay-and-add/subtract principal and thus the beamformer control input $BFC_L$ and $BFC_R$ may e.g. adjust the delay $\tau$. It is well-known to the skilled artisan that by establishing and varying the delay $\tau$ in a delay-and-add/subtract based beamformer, the direction $\theta$ of maximum/minimum amplification is varied, i.e. the reception lobe of the beamformer is angularly shifted. As also disclosed in the WO 00/68703 and also preferably applied to the overall of the present invention, signal processing is performed in frequency mode and frequency-specifically. At the output of the histogram-forming units 44 the instantaneously prevailing DOA-dependent histograms are present and signals or data dependent there from are fed to a histogram classification unit 46. Therein, the histogram courses resulting from left ear and right ear acoustical signal reception are evaluated, thereby preferably including comparing the histogram courses as prevailing at the units $44_L$, $44_R$.

In unit 46 on one hand the histogram courses per se are evaluated, e.g. and with an eye on fig. 8 on peaks, width of the peaks, time behavior of the peaks etc., and the acoustical surrounding with respect to acoustical sources therein is respectively classified, as e.g. under the aspect of "acoustical source moving away", "acoustical source moving in the surrounding", "acoustical source becoming less relevant", "new acoustical source appearing", "acoustical source disappearing", "head of the individual moving", etc. Additionally the interrelation of both histogram courses is evaluated, thereby detecting how one of the histogram courses alters or appears with respect to the other side histogram course. This is for instance caused by the respective $HRTF_L$ and $HRTF_R$ becoming at the left and right ears (L, R) differently effective in dependency of $DOA\varphi$. Instead of performing classification on the basis of DOA according to the present invention other classifications may be exploited as for instance described in the WO 02/32208 of the same applicant which accords with the US application no 10/059 059.

At the output of histogram classifying unit 46 there are generated control signals or data dependent on the classification result and from preset classification-dependent settings to be realized at the hearing device system. Thereby at the output of classification unit 46 a signal or data is generated, which is operationally connected to the beamformer control input $BFC_L$ and $BFC_R$ and on the other hand there is generated a control signal or data input to the weighting unit 49, which accords to the unit $9_W$ of the system of fig. 7. The beamformer control data and respective output is shown at BFC in fig. 9, the weighting unit control signals or data and respective output of unit 46 by SC. The SC signals or data do control, as was more generically shown in fig. 6 at the output of unit $12_W$, the weighting unit 49 in that, shown by varying weighting coefficients $\alpha$ to $\gamma$ in Fig. 6, the weights or transfer functions with which the output signals at outputs $A_{1L}$, $A_{1R}$ respectively act upon electrical/mechanical converters $47_L$ and $47_R$.

To further explain the embodiment of fig. 9 let us make an example. To start with there shall appear in the $\varphi = 0$ DOA-direction with respect to the units 40 a significant acoustical source. The beamformers of the units 40 have their lobe directed on that source defining for $\varphi = 8 = 0$. Both histograms at unit 44 may have e.g. a course as shown in fig. 8(a). The histogram classification unit 46 recognizes histogram peaks for $\varphi = 0$ at both histograms, and this defines at unit 46 for a yet stable and significant acoustical source. Accordingly by means of BFC the beamformers are kept on $\theta = 0$. The SC control signal controls the selection unit 49 for equally weighted influence of signals or data appearing at both outputs $A_{1L}$ $A_{1R}$ upon the converters 47.

Now let's assume this relevant acoustic source in the acoustical surrounding U starts to move to the right-hand side of fig. 9. This is recognizable at unit 46, because both histogram courses will show a development according to fig. 8(d). Thus, unit 46 recognizes: "source is moving to the right". As the acoustical source considered leads still to a significant sharp peak in both histogram courses, the beamformers of units 40 are both controlled by the control signals or data BFC to follow that source. Still the SC control signals control selection unit 46 at least nearly for equally distributed weighting of the influence of the output signals $A_{1L}$ and $A_{1R}$ upon the converters $47_L$ and $47_R$.

As the acoustical source moves further to the right the head-related transfer function HRTF starts to influence the acoustical signals as impinging on the units 40. Whereas the right-hand side received acoustical signals will not be affected by the HRTF, the left-hand side received acoustical signals from that source become more and more influenced by HRTF as the acoustical source becomes "hidden" by the individual's head H. Therefore, the histogram course at unit $44_R$ will still have a pronounced peak representing the source considered, whereas due to the HRTF the histogram course at unit $44_L$ will show at the angular position of the source considered, which is equal to the angular position of the peak in the histogram course at unit $44_R$, a more and more enlarged, less pronounced peak. This is, purely as an example, shown in fig. 9 aside the histogram-forming units 44 and with respect to the same angular position $\varphi_S$ of the acoustical source considered. The classifying unit 46 recognizes by comparing the two histogram courses that at the same angular position $\varphi_S$ the left side histogram course has a widened and less pronounced peak with respect to the right-hand histogram course. This indicates the type of acoustical surrounding according to which a moving acoustical source has moved so far to the right that the respective HRTF function becomes effective. This means that the data from that source processed in the left ear unit $40_L$ become less accurate than the data processed in the right ear unit $40_R$ from that source and therefore the selection unit 49 is controlled to react on this specific exemplified situation by increasing the influencing of the right side signals or data at output $A_{1R}$ upon the converters $47_L$ and $47_R$. Thereby and e.g. within unit 49 the $HRTF_L$ function, which takes effect on the acoustical signals impinging upon the left side unit $40_L$, will be maintained with respect to data operationally acting upon converter $47_L$ in a most preferred mode, so as to maintain for the individual spatial perception of the acoustical source. With respect to beam control, as the DOA data of the right ear unit $40_R$ become according to this example more accurate than the respective data from unit $40_L$ e.g. due to higher level acoustic signals, also beamformer control will preferably be at least dominated by the DOA data from the right ear unit $40_R$ (not specifically shown in fig. 9).

The weighting-coefficients or functions as of $\alpha$ to $\gamma$ of fig. 6, are preferably complex valued, frequency or frequency band dependent functions. In the classifier unit also multiple acoustical source situations are detected and predetermined strategies are set, how to control on one hand the beamformers, on the other hand the signal transmission at weighting unit most suitably for specific acoustical surroundings.

Thus, a binaural hearing device system is achieved by the present invention, which incorporates "intelligent" system adjustment based on the evaluation of DOA histogram course.

Once again it must be emphasized that the data or signal processing functions which have been explained as by fig. 9 may be split in a great variety of realization modes to the two hearing devices or may be centralized within a unit remote from the hearing devices, and accordingly the signal transmission link 5 from one ear side to the other will be provided. Further, the skilled artisan recognizes that the system as of fig. 9 will incorporate different digital processing unit DSPs, especially along the double-arrowed operational connections so as to take into account specific hearing improvement needs at both individual's ears, HRTF functions etc.

The present invention provides classification of the acoustical surrounding of an individual so as to appropriately control a binaural hearing device, based on evaluation of the direction of arrival DOA.

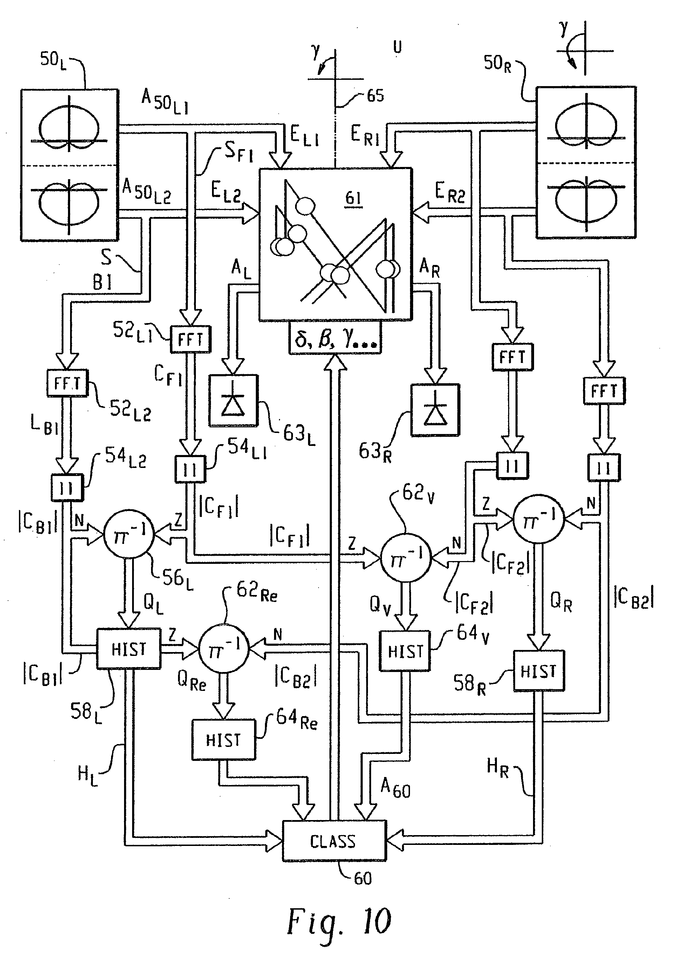

An approach how to determine the DOA is, as was explained before, explained in detail in the WO 00/68703. Based on that teaching, in fig. 10 there is exemplified a binaural hearing device system whereat on one hand combined data or signals from at least two input acoustical/electrical converters are respectively transmitting from one ear side to the other. On the other hand the embodiment of fig. 10 incorporates also classification of the acoustical surrounding realised on the basis as disclosed in the WO 00/68703. A left ear reception unit $50_L$ comprises two beamformers one defining a maximum amplification characteristic in DOA = 0° direction, the other one in the backwards DOA = 180° direction. In fig. 10 the beamformers are exemplified as being equal first order cardoid beamformers.

Unit $50_L$ outputs at respective outputs $A_{50L1}$ and $A_{50L2}$ signals or data dependent on the impinging acoustical signals amplified by the respective DOA dependent amplification of the beamformers and frequency dependent.

These signals are respectively denoted in fig. 10 by $S_{F1}$ and $S_{B1}$. This output signals are led after analogue/digital conversion (not shown) to time domain/frequency domain conversion units $52_{L1}$ and $52_{L2}$ resulting in frequency specific output signals or data $C_{B1}$ and $C_{F1}$. Signals dependent from the output signals of the conversion units 52 are further fed to absolute value forming units $54_{L2}$ and $54_{L1}$ outputing respective frequency specific signals or data $|C_{B1}|$ and $|C_{F1}|$. These absolute value signals or signals dependent there from are fed to a quotient forming or division unit $56_L$ outputing for left ear reception unit $50_L$ frequency specific a quotient $Q_L$. Signals or data dependent from that quotient $Q_L$ are subjected to histogram forming in a histogram forming unit $58_L$ outputing of histogram data $H_L$.

The right ear side with right ear reception unit $50_R$ up to data $H_R$ is preferably construed exactly equally to the left ear side as just described and will therefore not specifically be described again.

The histogram data from the two histogram forming units $58_L$ and $58_R$ are input to a classifying unit 60.

Further, signals dependent on the front-forwards beamformers at both reception units $50_L$ and $50_R$ namely $|C_{F1}|$ and $|C_{F2}|$ are fed to a further quotient forming unit $62_V$ and in analogy signals dependent from the output signal of the rear beamformers of both reception units as of $|C_{B1}|$ and $|C_{B2}|$ are fed to still further quotient forming unit $62_{Re}$. Signals or data dependent from the result at the said quotient forming units $62_V$ and $62_{Re}$ are input to respective histogram forming units $64_{Re}$ and $64_V$. The histogram data output by these histogram forming units are again input to the classification unit 60.

After classification, e.g. as will just be discussed, the classification unit 60 generates output signals or data which are operationally linked to a control input of the weighting unit 61. As a function of the classification result-data output by classification unit 60 signal transfer within weighting unit 61 is controlled, namely:

- from an input $E_{L1}$ to which signals dependent from the forward beamformer of unit $50_L$ are fed to output $A_L$ and output $A_R$ respectively,

- from an input $E_{L2}$ to which signals or data dependent from the output signals of the rear beamformer of unit $50_L$ are fed respectively to the output $A_L$ and $A_R$

- and in complete analogy, from the right ear input $E_{R1}$, $E_{R2}$ and to the said respective outputs $A_L$ and $A_R$. The signals output at $A_L$ and $A_R$ are operationally fed to the output electrical/mechanical converters $63_L$ and $63_R$ respectively.

We define:

$$Q_L = \frac{|C_{F1}|}{|C_{B1}|}$$

$$Q_R = \frac{|C_{F2}|}{|C_{B2}|}$$

$$Q_{Re} = \frac{|C_{B1}|}{|C_{B2}|}$$

$$Q_V = \frac{|C_{F1}|}{|C_{F2}|}$$

Let's discuss possible classification results and criteria exploited and generated at unit 60 whenever an acoustical signal source in the surrounding U is detected with different DOA's.

Whenever DOA φ is between 0° and 90° following is valid:

$$Q_L > 1 \text{ and } Q_V > 1.$$

It has to be noted that it is preferred to consider $Q_V$ in this case than $Q_{Re}$ because the acoustical signal impinges at the higher level on the forward beamformer of both units 50, the output signals of these beamformers being thus more accurate with respect to signal/noise than the output signals of the respective rear side beamformers.

The same is considered with respect to evaluating $Q_L$ or $Q_R$, the signals leading to $Q_L$ have a better signal/noise ratio than the signals leading to $Q_R$ because as the target acoustic source moves towards 90° the right side HRTF more and more influences signals received at the right ear unit $50_R$. These considerations are made also in the following cases to be discussed and are not repeated.

As the target source is located at the DOA φ between 90° and 180° the following is valid:

$$Q_L < 1 \text{ and } Q_{Re} > 1.$$

As the target source moves on to a DOA φ between 180° and 270° the following prevails:

$$Q_R < 1 \text{ and } Q_{Re} > 1.$$

Finally as the target source moves to a position between 270° and 360° the following prevails:

$$Q_R > 1 \text{ and } Q_V < 1.$$

Thus by evaluating these criteria, as a simplified example, within the classification unit 60 it is established around 360° where an acoustical source is located and accordingly in weighting unit 61 the respective signal transfer functions are set. As an example:

If the source is detected by the above criteria to be located at a DOA between 90° and 180° the rear side beamformer of left ear reception unit $50_L$ will become master beamformer because that beamformer outputs a signal with best signal/noise ratio. Therefore the transfer functions or coefficients according to fig. 6 from input $E_{L2}$ on the one hand to $A_L$ and on the other hand to $A_R$ will become governing. Thereby the transferred function from $E_{L2}$ to $A_R$ will consider the HRTF which is not influencing at the source position discussed signals impinging on the reception unit 50L but which must be considered for driving the right output converter 63R so as to maintain spatial source perception. Simplified the forward beamformer of unit 50L and both beamformers at unit 50R become slaves and their respective output signals are merely exploited to generate the respective quotients to allow the classification unit 60 to properly classify the prevailing DOA so as to properly control signal transfer in weighting unit 61.

**Claims**

1. A method for producing control signals or data at a binaural hearing device system comprising a first device for one ear of an individual, a second device for the other ear, a data communication link between said first and said second device, said control signals or data being applied for controlling a signal transfer characteristic of acoustical signals impinging on said devices to electrical signals driving at least one electrical/mechanical output converter of said binaural hearing device system via said communication link, comprising the steps of generating first signals or data which are indicative of direction of arrival of acoustical signals impinging on a sensing area at at least one of said first and said second device and generating said control signals or data in dependency of said first signals or data.

2. The method of claim 1, further comprising generating in dependency of said first signals or data a histogram and generating said control signals or data in dependency of said histogram.

3. The method of claim 2, further comprising the step of classifying said histogram and generating different control signals or data in dependency of the result of said classifying.

4. The method of claim 3, wherein said step of classifying said histogram comprises the steps of classifying said histogram according to at least one of the following criteria:

   • angular location and/or movement of an acoustical source with respect to said device and/or other sources
   • distance and/or its time evolution of an acoustical source with respect to said device and/or to other sources
   • significance of an acoustical source with respect to other acoustical sources
   • angular movement of the device with respect to acoustical sources

and generating said control signals or data in dependency of at least one result of said classifying under said at least one of said criteria.

5. The method of claim 1, further comprising the steps of providing said devices with a beamformer characteristic defining for amplification between an acoustical signal impinging on said devices and an electrical signal or data in dependency of direction of arrival of said acoustical signal with respect to said devices, controlling said at least one signal transfer characteristic comprising controlling said beamformer characteristic.

6. The method of claim 5, further comprising generating in dependency of said first signals or data a histogram and controlling at least said beamformer characteristic in dependency of said histogram.

7. The method of claim 6, further comprising the step of classifying said histogram and generating different control signals or data in dependency of the result of said classifying.

8. The method of claim 7, wherein said step of classifying said histogram comprises the step of classifying said histogram according to at least one of the following criteria:

   • angular location and/or movement of an acoustical source with respect to said device and/or other sources
   • distance and/or its time evolution of an acoustical source with respect to said device and/or to other sources
   • significance of an acoustical source with respect to other acoustical sources
   • angular movement of the device with respect to acoustical sources

and controlling at least said beamformer characteristic in dependency of at least one result of said classifying under at least one of said criteria.

9. The method of claim 1, comprising the steps of generating said first electrical signal in dependency of acoustical signals impinging upon a first acoustical receiver, generating second electrical signals in dependency of acoustical signals impinging upon a second acoustical receiver, driving a first electrical/mechanical converter with third electric signal and a second electrical/mechanical converter with fourth electric signal and controlling by said control signals or data at least one of

   • the transfer characteristic from said first electrical signal to said forth electric signal
   • the transfer characteristic from said second electrical signal to said forth electric signal
   • the transfer characteristic from said first electrical signal to said third electric signal
   • the transfer characteristic from said second electrical signal to said third electric signal.

10. The method of claim 9, further comprising generating in dependency of at least one of said first and of said second electric signals at least one histogram and controlling at least one of said transfer characteristics in dependency of said at least one histogram.

11. The method of claim 10, further comprising the steps of classifying said at least one histogram and differently controlling said at least one transfer characteristic in dependency of results of said classifying.

12. The method of claim 11, further comprising the step of controlling said at least one transfer characteristic in dependency of at least one result under at least one of the following classifying criteria:

• angular location and/or movement of an acoustical source with respect to said device and/or other sources
• distance and/or its time evolution of an acoustical source with respect to said device and/or to other sources
• significance of an acoustical source with respect to other acoustical sources
• angular movement of said device with respect to acoustical sources.

13. The method of claim 12, further comprising the step of reintroducing a head-related transfer function in at least one of said transfer functions from said first signal to said fourth signal and from said second signal to said third signal.

14. A binaural hearing device system comprising a first device for one ear of an individual, a second device for the other ear, a data communication link between said first and said second device, an acoustical/electrical input converter arrangement with an output, an electrical/mechanical output converter arrangement with an input, a direction of arrival determining unit with an input operationally connected to said output of said acoustical/electrical input converter arrangement and generating at an output a signal or data indicative of direction of arrival of acoustical signals impinging on said acoustical/electrical input converter arrangement, and a controlled signal transfer unit, an input of said signal transfer unit being operationally connected to the output of said acoustical/electrical input converter arrangement, and an output of said signal transfer unit being operationally connected via said communication link to the input of said electrical/mechanical output converter arrangement, and providing for controlled signal transfer between said input of said signal transfer unit and said output of said signal transfer unit, and having a control input being operationally connected to the output of said direction of arrival determining unit.

15. The system of claim 14, further comprising a histogram forming unit interconnected between said output of said direction of arrival determining unit and said control input of said controlled transfer unit.

16. The system of claim 15, further comprising a classifying unit interconnected between an output of said histogram forming unit and said control input of said controlled transfer unit.

17. The system of claim 16, wherein said acoustical/electrical input converter arrangement comprises a left ear and a right ear acoustical/electrical input converter subarrangement, said electrical/mechanical output converter arrangement comprising a left ear and a right ear electrical/mechanical output converter subarrangement, said controlled transfer unit controlling signal transfer from said left ear acoustical/electrical input converter subarrangement to both said left ear and said right ear electrical/mechanical output converter subarrangement and from said right ear acoustical/electrical input converter subarrangement to both said left ear and said right ear electrical/mechanical output converter subarrangement.

18. The system of claim 14 being a binaural hearing aid system.

19. The method of claim 1, wherein said binaural hearing device system is a binaural hearing aid system.

20. The system according to at least one of claims 14 to 18, wherein said first device comprises a reception unit with at least two input acoustical/electrical converters and a signal processing unit, the inputs of said signal processing unit being operationally connected to the electrical outputs of said at least two input acoustical/electrical converters and generating at an output of said signal processing unit a signal dependent on signals at said input of said signal processing unit, said communication link being provided at the output side of said processing unit and transmitting signals dependent upon said output signal of said processing unit to said second device comprising said output electrical/mechanical converter.

21. The system of claim 20, wherein said first device does not comprise an electrical/mechanical output converter.

22. The system of claim 20, wherein said second device does not comprise an input acoustical/electrical converter.

**23.** The system of claim 20, wherein said first device comprises an output electrical/mechanical converter unit, the input thereof being operationally connected to the output of said processing unit.

**24.** The system of claim 20, wherein said reception unit is a first reception unit, said at least two input acoustical/electrical converters are first acoustical/electrical converters at said first reception unit, said signal processing unit is a first signal processing unit, said output electrical/mechanical converter is a second output electrical/mechanical converter, said first device comprises a first output electrical/mechanical converter, said second device comprises a second reception unit with at least one second input acoustical/electrical converter.

**25.** The system of claim 20, wherein said data communication link is a wire-bound, an optical fiber or a wireless communication link.

**26.** The system of claim 24, wherein said second reception unit comprises at least two second input acoustical/electrical converters and a second signal processing unit.

**27.** The system of claim 26, wherein the inputs of said second signal processing unit are operationally connected to the outputs of said second input acoustical/electrical converters and generates at a second output a signal dependent on signals at both said inputs of said second signal processing unit, said data communication link being provided additionally at the output side of said second signal processing unit.

**28.** The system of claim 26 or 27, wherein the output of said first signal processing unit is operationally connected to a first input of a weighting unit, the output of said second signal processing unit being operationally connected to a second input of said weighting unit, said weighting unit having a first output operationally connected to the input of said first output converter and a second output operationally connected to the input of said second output converter, said weighting unit having a control input, said weighting unit varying operational connection of said first input to said first output, from said first input to said second output, from said second input to said first output and from said second input to said second output, controlled by a signal applied to said control input.

**29.** The system of claim 28, wherein said operational connections comprise frequency dependent, complex transfer functions.

**30.** The system of claim 28, wherein said control input is operationally connected to an output of a classification unit with at least one input operationally connected to at least one output of at least one of said reception units.

**31.** The system of claim 20, wherein said first device comprises a beamformer unit with a beamcontrol input and with an output, a detection unit for the direction of arrival of an acoustical signal impinging upon said reception unit and generating an output signal in dependency of said direction of arrival at an output, said output of said direction of arrival detection unit being operationally connected to said beamcontrol input of said beamformer unit.

**32.** The system of claim 30, wherein said determination unit for the direction of arrival of an acoustical signal is interconnected between said at least one input of said classification unit and said at least one output of said at least one reception unit.

**33.** The system of claim 32, further comprising at least one histogram forming unit the input thereof being operationally connected to said at least one output of said at least one reception unit, the output thereof being operationally connected to an input of said classification unit.

**Patentansprüche**

**1.** Ein Verfahren zum Erzeugen von Steuersignalen oder Daten an einem binauralen Hörgerätesystem umfassend ein erstes Gerät für ein Ohr eines Individuums, ein zweites Gerät für das andere Ohr, eine Datenkommunikationsverbindung zwischen dem ersten und dem zweiten Gerät, wobei die Steuersignale oder Daten zum Steuern einer Signalübertragungscharakteristik von akustischen Signalen, welche auf die Geräte auftreffen, zu elektrischen Signalen, welche mindesten einen elektrisch/mechanischen Ausgangswandler des binauralen Hörgerätesystems ansteuern, via die Datenkommunikationsverbindung angelegt werden, umfassend die Schritte des Erzeugens erster Signale oder Daten, welche indikativ für die Einfallsrichtung akustischer Signale auf einen Erfassungsbereich bei mindestens einem des ersten und des zweiten Gerätes sind, und des Erzeugens der Steuersignal oder Daten in Abhängigkeit der ersten Signale oder Daten.

**2.** Das Verfahren nach Anspruch 1, ferner umfassend das Erzeugen eines Histogramms in Abhängigkeit der ersten Signale oder Daten und das Erzeugen der Steuersignale oder Daten in Abhängigkeit des Histogramms.

**3.** Das Verfahren nach Anspruch 2, ferner umfassend den Schritt des Klassifizierens des Histogramms und des Erzeugens verschiedener Steuersignale und Daten in Abhängigkeit des Ergebnisses des Klassifizierens.

4. Das Verfahren nach Anspruch 3, wobei der Schritt des Klassifizierens des Histogramms die Schritte des Klassifizierens des Histogramms nach mindestens einem der folgenden Kriterien umfasst:

- Winkellage und/oder Bewegung einer akustischen Quelle in Bezug auf das Gerät und/oder andere Quellen
- Abstand und/oder dessen zeitliche Entwicklung einer akustischen Quelle in Bezug auf das Gerät und/oder andere Quellen
- Bedeutung einer akustischen Quelle in Bezug auf andere Schallquellen
- Winkelbewegung des Gerätes in Bezug auf akustische Quellen

und das Erzeugen der Steuersignale oder Daten in Abhängigkeit von mindestens einem Ergebnis des Klassifizierens nach mindestens einem der Kriterien.

5. Das Verfahren nach Anspruch 1, ferner umfassend die Schritte des Bereitstellens einer Strahlformungscharakteristik für die Geräte, welche die Verstärkung zwischen einem akustischen Signal, welches auf die Geräte auftrifft, und einem elektrischen Signal oder Daten in Abhängigkeit der Einfallsrichtung des akustischen Signals in Bezug auf die Geräte definiert, und des Steuerns der mindestens einen Signalübertragungscharakteristik, umfassend das Steuern der Strahlformungscharakteristik.

6. Das Verfahren nach Anspruch 5, ferner umfassend das Erzeugen eines Histogramms in Abhängigkeit der ersten Signale oder Daten, und das Steuern mindestens der Strahlformungscharakteristik in Abhängigkeit des Histogramms.

7. Das Verfahren nach Anspruch 6, ferner umfassend den Schritt des Klassifizierens des Histogramms und des Erzeugens verschiedener Steuersignale oder Daten in Abhängigkeit des Ergebnisses des Klassifizierens.

8. Das Verfahren nach Anspruch 7, wobei der Schritt des Klassifizierens des Histogramms den Schritt des Klassifizierens des Histogramms nach mindestens einem der folgenden Kriterien umfasst:

- Winkellage und/oder Bewegung einer akustischen Quelle in Bezug auf das Gerät und/oder andere Quellen
- Abstand und/oder dessen zeitliche Entwicklung einer akustischen Quelle in Bezug auf das Gerät und/oder andere Quellen

- Bedeutung einer akustischen Quelle in Bezug auf andere Schallquellen
- Winkelbewegung des Gerätes in Bezug auf akustische Quellen

und das Steuern mindestens der Strahlformungscharakteristik in Abhängigkeit von mindestens einem Ergebnis des Klassifizierens nach mindestens einem der Kriterien.

9. Das Verfahren nach Anspruch 1, umfassend die Schritte des Erzeugens des ersten elektrischen Signals in Abhängigkeit von akustischen Signalen, welche auf einen ersten akustischen Empfänger auftreffen, des Erzeugens des zweiten elektrischen Signals in Abhängigkeit von akustischen Signalen, welche auf einen zweiten akustischen Empfänger auftreffen, des Ansteuerns eines ersten elektrisch/mechanischen Wandlers mit einem dritten elektrischen Signal und eines zweiten elektrisch/mechanischen Wandlers mit einem vierten elektrischen Signal und des Steuerns mittels der Steuersignale oder Daten von mindestens einem von

- die Übertragungscharakteristik vom ersten elektrischen Signal zum vierten elektrischen Signal
- die Übertragungscharakteristik vom zweiten elektrischen Signal zum vierten elektrischen Signal
- die Übertragungscharakteristik vom ersten elektrischen Signal zum dritten elektrischen Signal
- die Übertragungscharakteristik vom zweiten elektrischen Signal zum dritten elektrischen Signal.

10. Das Verfahren nach Anspruch 9, ferner umfassend das Erzeugen von mindestens einem Histogramm in Abhängigkeit von mindestens einem des ersten und des zweiten elektrischen Signals und das Steuern von mindestens einer der Übertragungscharakteristiken in Abhängigkeit des mindestens einen Histogramms.

11. Das Verfahren nach Anspruch 10, ferner umfassend die Schritte des Klassifizierens des mindestens einen Histogramms und des unterschiedlichen Steuerns der mindestens einen Übertragungscharakteristik in Abhängigkeit des Ergebnisses des Klassifizierens.

12. Das Verfahren nach Anspruch 11, ferner umfassend den Schritt des Steuerns der mindestens einen Übertragungscharakteristik in Abhängigkeit von mindestens einem Ergebnis nach mindestens einem der folgenden Klassifizierungskriterien:

- Winkellage und/oder Bewegung einer akustischen Quelle in Bezug auf das Gerät und/oder andere Quellen
- Abstand und/oder dessen zeitliche Entwicklung einer akustischen Quelle in Bezug auf das Gerät und/oder andere Quellen
- Bedeutung einer akustischen Quelle in Bezug auf andere Schallquellen
- Winkelbewegung des Gerätes in Bezug auf akustische Quellen.

13. Das Verfahren nach Anspruch 12, ferner umfassend den Schritt des Wiedereinführens einer kopfbezogenen Übertragungsfunktion in mindestens einer der Übertragungsfunktionen vom ersten Signal zum vierten Signal und vom zweiten Signal zum dritten Signal.

14. Ein binaurales Hörgerätesystem umfassend ein erstes Gerät für ein Ohr eines Individuums, ein zweites Gerät für das andere Ohr, eine Datenkommunikationsverbindung zwischen dem ersten und dem zweiten Gerät, eine akustisch/elektrische Eingangswandler-Anordnung mit einem Ausgang, eine elektrisch/mechanische Ausgangswandler-Anordnung mit einem Eingang, eine Einfallsrichtung-Bestimmungseinheit mit einem Eingang, welcher mit dem Ausgang der akustisch/elektrischen Eingangswandler-Anordnung wirkverbunden ist, und an einen Ausgang ein Signal oder Daten generiert, welche indikativ sind für die Einfallsrichtung akustischer Signale, welche auf die akustisch/elektrische Eingangswandler-Anordnung auftreffen, und eine gesteuerte Signalübertragungseinheit, wobei ein Eingang der Signalübertragungseinheit mit dem Ausgang der akustisch/elektrischen Eingangswandler-Anordnung wirkverbunden ist, und ein Ausgang der Signalübertragungseinheit via die Datenkommunikationsverbindung mit dem Eingang der elektrisch/mechanischen Ausgangswandler-Anordnung wirkverbunden ist, und wobei die Signalübertragungseinheit eine gesteuerte Signalübertragung zwischen dem Eingang der Signalübertragungseinheit und dem Ausgang der Signalübertragungseinheit vorsieht, und einen Steuereingang aufweist, welcher mit dem Ausgang der Einfallsrichtung-Bestimmungseinheit wirkverbunden ist.

15. Das System nach Anspruch 14, ferner umfassend eine Histogrammbildungseinheit, welche zwischen dem Ausgang der Einfallsrichtung-Bestimmungseinheit und dem Steuereingang der gesteuerten Übertragungseinheit geschaltet ist.

16. Das System nach Anspruch 15, ferner umfassend eine Klassifizierungseinheit, welche zwischen einem Ausgang der Histogrammbildungseinheit und dem Steuereingang der gesteuerten Übertragungseinheit geschaltet ist.

17. Das System nach Anspruch 16, wobei die akustisch/elektrische Eingangswandler-Anordnung eine links-Ohr und eine rechts-Ohr akustisch/elektrische Eingangswandler-Unteranordnung umfasst, und die elektrisch/mechanische Ausgangswandler-Anordnung ein links-Ohr und eine rechts-Ohr elektrisch/mechanische Ausgangswandler-Unteranordnung umfasst, und die gesteuerte Übertragungseinheit die Signalübertragung von der links-Ohr akustisch/elektrischen Eingangswandler-Unteranordnung zur links-Ohr wie auch zur rechts-Ohr elektrisch/mechanischen Ausgangswandler-Unteranordnung und von der rechts-Ohr akustisch/elektrischen Eingangswandler-Unteranordnung zur links-Ohr wie auch zur rechts-Ohr elektrisch/mechanischen Ausgangswandler-Unteranordnung steuert.

18. Das System nach Anspruch 14, wobei es ein binaurales Hörhilfegerätesystem ist.

19. Das Verfahren nach Anspruch 1, wobei das binaurale Hörgerätesystem ein binaurales Hörhilfegerätesystem ist.

20. Das System nach mindestens einem der Ansprüche 14 bis 18, wobei das erste Gerät mindestens eine Empfangseinheit mit mindestens zwei akustisch/elektrischen Eingangswandlern und eine Signalverarbeitungseinheit umfasst, wobei die Eingänge der Signalverarbeitungseinheit mit den elektrischen Ausgängen der mindestens zwei akustisch/elektrischen Eingangswandler wirkverbunden sind, und an einem Ausgang der Signalverarbeitungseinheit ein Signal in Abhängigkeit von Signalen an den Eingängen der Signalverarbeitungseinheit erzeugt wird, und die Kommunikationsverbindung an der Ausgangsseite der Verarbeitungseinheit vorgesehen ist, und Signale in Abhängigkeit des Ausgangssignals der Verarbeitungseinheit an das zweite Gerät mit dem elektrisch/mechanischen Ausgangswandler übertragen werden.

21. Das System nach Anspruch 20, wobei das erste Gerät keinen elektrisch/mechanischen Ausgangswandler umfasst.

22. Das System nach Anspruch 20, wobei das zweite Gerät keinen akustisch/elektrischen Eingangswandler umfasst.

23. Das System nach Anspruch 20, wobei das erste Gerät eine elektrisch/mechanische Ausgangswandler-Einheit umfasst, wobei deren Eingang mit dem Ausgang der Verarbeitungseinheit wirkverbunden ist.

24. Das System nach Anspruch 20, wobei die Empfangseinheit eine erste Empfangseinheit ist, die mindestens zwei akustisch/elektrischen Eingangswandler erste akustisch/elektrische Wandler an der ersten Empfangseinheit sind, die Signalverarbeitungseinheit eine erste Signalverarbeitungseinheit ist, der elektrisch/mechanische Ausgangswandler ein zweiter elektrisch/mechanischer Ausgangswandler ist, das erste Gerät einen ersten elektrisch/mechanischen Ausgangwandler umfasst, das zweite Gerät eine zweite Empfangseinheit mit mindestens einem zweiten akustisch/elektrischen Eingangswandler umfasst.

25. Das System nach Anspruch 20, wobei die Datenkommunikationsverbindung eine drahtgebundene, eine optische Faser oder eine drahtlose Kommunikationsverbindung ist.

26. Das System nach Anspruch 24, wobei die zweite Empfangseinheit mindestens zwei zweite akustisch/elektrische Eingangswandler und eine zweite Signalverarbeitungseinheit umfasst.

27. Das System nach Anspruch 26, wobei die Eingänge der zweiten Signalverarbeitungseinheit mit den Ausgängen des zweiten akustisch/elektrischen Eingangswandlers wirkverbunden sind und an einem zweiten Ausgang ein Signal in Abhängigkeit von Signalen an den beiden Eingängen der zweiten Signalverarbeitungseinheit erzeugt wird, wobei die Datenkommunikationsverbindung zusätzlich an der Ausgangsseite der zweiten Signalverarbeitungseinheit vorgesehen ist.

28. Das System nach Anspruch 26 oder 27, wobei der Ausgang der ersten Signalverarbeitungseinheit mit einem ersten Eingang einer Gewichtungseinheit wirkverbunden ist, der Ausgang der zweiten Signalverarbeitungseinheit mit einem zweiten Eingang der Gewichtungseinheit wirkverbunden ist, ein erster Ausgang der Gewichtungseinheit mit dem Eingang des ersten Ausgangswandlers und ein zweiter Ausgang der Gewichtungseinheit mit dem Eingang des zweiten Ausgangswandlers wirkverbunden ist, die Gewichtungseinheit einen Steuereingang aufweist, wobei die Gewichtungseinheit unterschiedliche Wirkverbindungen vom ersten Eingang zum ersten Ausgang, vom ersten Eingang zum zweiten Ausgang, vom zweiten Eingang zum ersten Ausgang und vom zweiten Eingang zum zweiten Ausgang mittels eines Signals, welches an den Steuereingang angelegt wird, gesteuert erstellen kann.

29. Das System nach Anspruch 28, wobei die Wirkverbindungen frequenzabhängige, komplexe Übertragungsfunktionen umfassen.

30. Das System nach Anspruch 28, wobei der Steuereingang mit einem Ausgang einer Klassifizierungseinheit mit mindestens einem Eingang wirkverbunden ist, der mit mindestens einem Ausgang von mindestens einer der Empfangseinheiten wirkverbunden ist.

31. Das System nach Anspruch 20, wobei das erste Gerät eine Strahlformungseinheit mit einem Strahlsteuerungseingang und einem Ausgang, eine Detektionseinheit zum Bestimmen der Einfallsrichtung akustischer Signale, welche auf die Empfangseinheit auftreffen, und zum Erzeugen eines Ausgangssignals in Abhängigkeit der Einfallsrichtung an einem Ausgang umfasst, wobei der Ausgang der Einfallsrichtung-Detektionseinheit mit dem Strahlsteuerungseingang der Strahlformungseinheit wirkverbunden ist.

32. Das System nach Anspruch 30, wobei die Bestimmungseinheit für die Einfallsrichtung eines akustischen Signals zwischen dem mindestens einen Eingang der Klassifizierungseinheit und dem mindestens einen Ausgang der mindestens einen Empfangseinheit geschaltet ist.

33. Das System nach Anspruch 32, ferner umfassend mindestens eine Histogrammbildungseinheit, deren Eingang mit dem mindestens einen Ausgang der mindestens einen Empfangseinheit wirkverbunden ist, und deren Ausgang mit einem Eingang der Klassifizierungseinheit wirkverbunden ist.

## Revendications

1. Procédé de production de signaux ou de données de commande au niveau d'un système d'appareil auditif binaural comprenant un premier appareil pour une oreille d'un individu, un second appareil pour l'autre oreille, un lien de communication de données entre ledit premier et ledit second appareil, lesdits signaux ou données de commande étant appliqués pour commander une caractéristique de transfert de signal de signaux acoustiques affectant lesdits dispositifs en signaux électriques pilotant au moins un convertisseur de sortie électrique/mécanique dudit système d'appareil auditif binaural par l'intermédiaire dudit lien de communication, comprenant les étapes de génération de premiers signaux ou données qui sont indicatifs de la direction d'arrivée de signaux acoustiques affectant une zone de capture au niveau d'au moins un dudit premier et dudit second appareil et la génération desdits signaux ou données de commande en fonction desdits premiers signaux ou données.

2. Procédé selon la revendication 1, comprenant en outre la génération en fonction desdits premiers signaux ou données d'un histogramme et la génération desdits signaux ou données de commande en fonction dudit histogramme.

3. Procédé selon la revendication 2, comprenant en outre l'étape de classification dudit histogramme et de génération de signaux ou données de commande différents en fonction du résultat de ladite classification.

4. Procédé selon la revendication 3, dans lequel ladite étape de classification dudit histogramme comprend les étapes de classification dudit histogramme selon au moins l'un des critères suivants:

   - emplacement et/ou mouvement angulaire d'une source acoustique par rapport audit appareil et/ou à d'autres sources
   - distance et/ou évolution dans le temps d'une source acoustique par rapport audit appareil et/ou aux autres sources
   - importance d'une source acoustique par rapport aux autres sources acoustiques
   - mouvement angulaire de l'appareil par rapport aux sources acoustiques

   et la génération desdits signaux ou données de commande en fonction d'au moins un résultat de ladite classification dans le cadre dudit au moins l'un desdits critères.

5. Procédé selon la revendication 1, comprenant en outre les étapes de fourniture aux appareils d'une caractéristique de dispositif de formation de faisceau définie pour amplification entre un signal acoustique affectant lesdits appareils et un signal ou une donnée électrique en fonction de la direction d'arrivée dudit signal acoustique par rapport auxdits appareils, commande de ladite au moins une caractéristique de transfert de signal comprenant la commande de ladite caractéristique de dispositif de formation de faisceau.

6. Procédé selon la revendication 5, comprenant en outre la génération en fonction desdits premiers signaux ou données d'un histogramme et la commande d'au moins ladite caractéristique de dispositif de formation de faisceau en fonction dudit histogramme.

7. Procédé selon la revendication 6, comprenant en outre l'étape de classification dudit histogramme et de génération de différents signaux ou données de commande en fonction du résultat de ladite classification.

8. Procédé selon la revendication 7, dans lequel ladite étape de classification dudit histogramme comprend l'étape de classification dudit histogramme selon au moins l'un des critères suivants:

   - emplacement et/ou mouvement angulaire d'une source acoustique par rapport audit appareil et/ou à d'autres sources
   - distance et/ou évolution dans le temps d'une source acoustique par rapport audit appareil et/ou aux autres sources
   - importance d'une source acoustique par rapport aux autres sources acoustiques
   - mouvement angulaire de l'appareil par rapport aux sources acoustiques

et la commande d'au moins ladite caractéristique de dispositif de formation de faisceau en fonction d'au moins un résultat de ladite classification dans le cadre d'au moins l'un desdits critères.

9. Procédé selon la revendication 1, comprenant les étapes de génération dudit premier signal électrique en fonction de signaux acoustiques affectant un premier récepteur acoustique, génération de deuxièmes signaux électriques en fonction de signaux acoustiques affectant un second récepteur acoustique, pilotage d'un premier convertisseur électrique/mécanique avec un troisième signal électrique et un second convertisseur électrique/mécanique avec un quatrième signal électrique et commande par lesdits signaux ou données de commande d'au moins l'une parmi

   - la caractéristique de transfert dudit premier signal électrique audit quatrième signal électrique
   - la caractéristique de transfert dudit deuxième signal électrique audit quatrième signal électrique
   - la caractéristique de transfert dudit premier signal électrique audit troisième signal électrique
   - la caractéristique de transfert dudit deuxième signal électrique audit troisième signal électrique.

10. Procédé selon la revendication 9, comprenant en outre la génération en fonction d'au moins l'un desdits premiers et desdits deuxièmes signaux électriques d'au moins un histogramme et la commande d'au moins l'une desdites caractéristiques de transfert en fonction dudit au moins un histogramme.

11. Procédé selon la revendication 10, comprenant en outre les étapes de classification dudit au moins un histogramme et la commande de manière différente de ladite au moins une caractéristique de transfert en fonction des résultats de ladite classification.

12. Procédé selon la revendication 11, comprenant en outre l'étape de commande de ladite au moins une caractéristique de transfert en fonction d'au moins un résultat dans le cadre d'au moins l'un des critères de classification suivants:

- emplacement et/ou mouvement angulaire d'une source acoustique par rapport audit appareil et/ou à d'autres sources
- distance et/ou évolution dans le temps d'une source acoustique par rapport audit appareil et/ou aux autres sources
- importance d'une source acoustique par rapport aux autres sources acoustiques
- mouvement angulaire dudit appareil par rapport aux sources acoustiques.

13. Procédé selon la revendication 12, comprenant en outre l'étape de réintroduction d'une fonction de transfert liée à la tête dans au moins l'une desdites fonctions de transfert dudit premier signal audit quatrième signal et dudit deuxième signal audit troisième signal.

14. Système d'appareil auditif binaural comprenant un premier appareil pour une oreille d'un individu, un second appareil pour l'autre oreille, un lien de communication de données entre ledit premier et ledit second appareil, un agencement de convertisseur d'entrée acoustique/électrique avec une sortie, un agencement de convertisseur de sortie électrique/mécanique avec une entrée, une unité de détermination de direction d'arrivée avec une entrée connectée de manière opérationnelle à ladite sortie dudit agencement de convertisseur d'entrée acoustique/électrique et générant au niveau d'une sortie un signal ou une donnée indicatif de la direction d'arrivée de signaux acoustiques affectant ledit agencement de convertisseur d'entrée acoustique/électrique, et une unité de transfert de signal commandé, une entrée de ladite unité de transfert de signal étant connectée de manière opérationnelle à la sortie dudit agencement de convertisseur d'entrée acoustique/électrique, et une sortie de ladite unité de transfert de signal étant connectée de manière opérationnelle par l'intermédiaire dudit lien de communication à l'entrée dudit agencement de convertisseur de sortie électrique/mécanique, et fournissant un transfert de signal commandé entre ladite entrée de ladite unité de transfert de signal et ladite sortie de ladite unité de transfert de signal, et ayant une entrée de commande qui est connectée de manière opérationnelle à la sortie de ladite unité de détermination de direction d'arrivée.

15. Système selon la revendication 14, comprenant en outre une unité de formation d'histogramme interconnectée entre ladite sortie de ladite unité de détermination de direction d'arrivée et ladite entrée de commande de ladite unité de transfert commandé.

16. Système selon la revendication 15, comprenant en outre une unité de classification interconnectée entre une sortie de ladite unité de formation d'histogramme et ladite entrée de commande de ladite unité de transfert commandé.

17. Système selon la revendication 16, dans lequel ledit agencement de convertisseur d'entrée acoustique/électrique comprend un sous-agencement de convertisseur d'entrée acoustique/électrique d'oreille gauche et d'oreille droite, ledit agencement de convertisseur de sortie électrique/mécanique comprenant un sous-agencement de convertisseur de sortie électrique/mécanique d'oreille gauche et d'oreille droite, ladite unité de transfert commandé commandant le transfert de signal dudit sous-agencement de convertisseur d'entrée acoustique/électrique d'oreille gauche au sous-agencement de convertisseur de sortie électrique/mécanique à la fois de ladite oreille gauche et de ladite oreille droite et dudit sous-agencement de convertisseur d'entrée acoustique/électrique d'oreille droite au sous-agencement de convertisseur de sortie électrique/mécanique à la fois de ladite oreille gauche et de ladite oreille droite.

18. Système selon la revendication 14, qui est un système de prothèse auditive binaurale.

19. Procédé selon la revendication 1, dans lequel ledit système d'appareil auditif binaural est un système de prothèse auditive binaurale.

20. Système selon au moins une des revendications 14 à 18, dans lequel ledit premier dispositif comprend une unité de réception avec au moins deux convertisseurs acoustiques/électriques d'entrée et une unité de traitement de signal, les entrées de ladite unité de traitement de signal étant connectées de manière opérationnelle aux sorties électriques desdits au moins deux convertisseurs acoustiques/électriques d'entrée et générant au niveau d'une sortie de ladite unité de traitement de signal un signal dépendant de signaux au niveau de ladite entrée de ladite unité de traitement de signal, ledit lien de communication étant ménagé au niveau du côté de sortie de ladite unité de traitement et transmettant des signaux dépendant dudit signal de sortie de ladite unité de traitement audit second dispositif comprenant ledit convertisseur électrique/mécanique de sortie.

21. Système selon la revendication 20, dans lequel ledit premier dispositif ne comprend pas de convertisseur de sortie électrique/mécanique.

22. Système selon la revendication 20, dans lequel ledit second dispositif ne comprend pas de convertisseur acoustique/électrique d'entrée.

**23.** Système selon la revendication 20, dans lequel ledit premier dispositif comprend une unité de convertisseur électrique/mécanique de sortie, dont l'entrée est connectée de manière opérationnelle à la sortie de ladite unité de traitement.

**24.** Système selon la revendication 20, dans lequel ladite unité de réception est une première unité de réception, lesdits au moins deux convertisseurs acoustiques/électriques d'entrée sont des premiers convertisseurs acoustiques/électriques au niveau de ladite première unité de réception, ladite unité de traitement de signal est une première unité de traitement de signal, ledit convertisseur électrique/mécanique de sortie est un second convertisseur électrique/mécanique de sortie, ledit premier dispositif comprend un premier convertisseur électrique/mécanique de sortie, ledit second dispositif comprend une seconde unité de réception avec au moins un second convertisseur acoustique/électrique d'entrée.

**25.** Système selon la revendication 20, dans lequel ledit lien de communication de données est un câble, une fibre optique ou un lien de communication sans fil.

**26.** Système selon la revendication 24, dans lequel ladite seconde unité de réception comprend au moins deux seconds convertisseurs acoustiques/électriques d'entrée et une seconde unité de traitement de signal.

**27.** Système selon la revendication 26, dans lequel les entrées de ladite seconde unité de traitement de signal sont connectées de manière opérationnelle aux sorties desdits seconds convertisseurs acoustiques/électriques d'entrée et génèrent au niveau d'une seconde sortie un signal dépendant de signaux au niveau des deux dites entrées de ladite seconde unité de traitement de signal, ledit lien de communication de données étant fourni en outre au niveau du côté de sortie de ladite seconde unité de traitement de signal.

**28.** Système selon la revendication 26 ou 27, dans lequel la sortie de ladite première unité de traitement de signal est connectée de manière opérationnelle à une première entrée d'une unité de pondération, la sortie de ladite seconde unité de traitement de signal étant connectée de manière opérationnelle à une seconde entrée de ladite unité de pondération, ladite unité de pondération ayant une première sortie connectée de manière opérationnelle à l'entrée dudit premier convertisseur de sortie et une seconde sortie connectée de manière opérationnelle à l'entrée dudit second convertisseur de sortie, ladite unité de pondération ayant une entrée de commande, ladite unité de pondération faisant varier la connexion opérationnelle de ladite première entrée à ladite première sortie, de ladite première entrée à ladite seconde sortie, de ladite seconde entrée à ladite première sortie et de ladite seconde entrée à ladite seconde sortie, commandée par un signal appliqué à ladite entrée de commande.

**29.** Système selon la revendication 28, dans lequel lesdites connexions opérationnelles comprennent des fonctions de transfert complexes dépendant de la fréquence.

**30.** Système selon la revendication 28, dans lequel ladite entrée de commande est connectée de manière opérationnelle à une sortie d'une unité de classification avec au moins une entrée connectée de manière opérationnelle à au moins une sortie d'au moins l'une desdites unités de réception.

**31.** Système selon la revendication 20, dans lequel ledit premier dispositif comprend une unité de dispositif de formation de faisceau avec une entrée de commande de faisceau et avec une sortie, une unité de détection pour la direction d'arrivée d'un signal acoustique affectant ladite unité de réception et générant un signal de sortie en fonction de ladite direction d'arrivée au niveau d'une sortie, ladite sortie de ladite unité de détection de direction d'arrivée étant connectée de manière opérationnelle à ladite entrée de commande de faisceau de ladite unité de dispositif de formation de faisceau.

**32.** Système selon la revendication 30, dans lequel ladite unité de détermination pour la direction d'arrivée d'un signal acoustique est interconnectée entre ladite au moins une entrée de ladite unité de classification et ladite au moins une sortie de ladite au moins une unité de réception.

**33.** Système selon la revendication 32, comprenant en outre au moins une unité de formation d'histogramme, dont l'entrée est connectée de manière opérationnelle à ladite au moins une sortie de ladite au moins une unité de réception, dont la sortie est connectée de manière opérationnelle à une entrée de ladite unité de classification.

Fig. 1

Fig. 2

22

Fig. 3

Fig. 4

Fig. 5

Fig. 6

Fig. 8

Fig. 7

Fig. 9

*Fig. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020041695 A
- WO 0232208 A
- US 10059059 B
- WO 0120965 A
- US 20020037087 A
- WO 0122790 A
- US 20020090098 A
- WO 9943185 A
- US 2002004695 A1
- WO 0068703 A

- US 09636443 B
- US 10180585 B
- WO 10180585 A
- WO 0054553 A
- US 09267742 B
- WO 9904598 A
- US 09146784 B
- WO 9909786 A
- US 09168184 B